# EUROPÄISCHE PATENTSCHRIFT

(11) **EP 0 860 572 B1**
(45) Veröffentlichungstag und Bekanntmachung des Hinweises auf die Patenterteilung: **16.04.2003**
(21) Anmeldenummer: 97120585.1
(22) Anmeldetag: 25.11.1997
(51) Int. Cl.: E05F 15/16, E05F 11/48, H02K 7/116, F16H 1/16

(54) **Elektromotorische Antriebsvorrichtung**
Drive with electromotor
Dispositif de commande à moteur électrique

(30) Priorität: 21.02.1997 DE 19706872
(43) Veröffentlichungstag der Anmeldung: 26.08.1998
(73) Patentinhaber: ROBERT BOSCH GMBH, 70442 Stuttgart (DE)
(72) Erfinder: Moskob, Frank, 77815 Bühl (DE); Dreier, Friedrich-Wilhlem, 76547 Sinzheim (DE); Kurzmann, Rainer, 77855 Achern (DE)

(56) Entgegenhaltungen:
- EP-A- 0 175 996
- DE-A- 2 952 408
- DE-B- 1 244 609
- DE-U- 9 209 929
- US-A- 5 027 670
- US-A- 5 172 463

## Beschreibung

### Stand der Technik

Die Erfindung betrifft eine elektromotorische Antriebsvorrichtung für Abdeckglieder von Öffnungen in Fahrzeugen, wie Fensterscheiben, Schiebedächer u.dgl., nach dem Oberbegriff der unabhängigen Ansprüche 1 und 2.

Bei einer als elektrischer Fensterheberantrieb für einen Seilzugfensterheber ausgebildeten elektromotorischen Antriebsvorrichtung dieser Art (DE 29 15 669 A1, Fig. 3), sitzt das Schneckenrad freidrehend auf einer in den Boden des topfförmigen Getriebegehäuses einseitig eingepreßten Lagerhülse, die frei auskragend in das Gehäuseinnere vorsteht. Ebenfalls freidrehend sitzt auf der Lagerhülse ein die Seiltrommel an das Schneckenrad drehfest ankoppelnder Mitnehmer, der mit einer Mitnehmerklaue in eine mit einer dämpfenden Auskleidung versehenen Aussparung im Schneckenrad axial hineinragt und mit einer zweiten Mitnehmerklaue axial in eine Lochscheibe formschlüssig eingreift. Die Lochscheibe sitzt drehfest auf einer durch die Lagerhülse hindurchgeführten Welle, auf der auch die Seiltrommel drehfest gehalten ist. Beim Drehen des Schneckenrads nimmt dieses über den Mitnehmer die Lochscheibe mit, die ihrerseits die Welle und damit die Seiltrommel dreht. Seiltrommel und Getriebegehäuse sind von einem haubenförmigen Getriebedeckel überdeckt, der zwei Radialöffnungen zum Durchtritt des auf den Umfang der Seiltrommel aufgewickelten Seils aufweist. Das in einem Rohr geführte Seil bildete eine am Fensterheber befestigte Schlinge, die über die angetriebene Seiltrommel verschoben wird und so das mit dem Fensterheber verbundene Fenster bewegt.

Mit der US-A-5,172,463 ist eine Antriebsvorrichtung für Fenster in Fahrzeugen bekannt geworden, bei der eine Seiltrommel 8 mit einem Schneckenrad 7 als eine Baueinheit ausgebildet ist und von einem zweitteiligen Getriebegehäuse umfasst wird. Die US 5,027,670 beschreibt eine Fensterhebervorrichtung bei der ein elektromotorisch betriebenes Schneckengetriebe, das mit einer Kabeltrommel gekoppelt ist und zwei topfförmigen Gehäuseteilen umschlossen wird, wobei sowohl das Schneckengetriebe also auch die Seiltrommel im Gehäuseinneren mittels einer flachen Dichtung zwischen den beiden Gehäuseteilen gegenüber eindringender Feuchtigkeit geschützt ist.

### Vorteile der Erfindung

Die erfindungsgemäße elektromotorische Antriebsvorrichtung mit den kennzeichnenden Merkmalen des Anspruchs 1 hat demgegenüber den Vorteil daß durch die konstruktive Gestaltung von Schneckenrad und Seiltrommel sowie von Getriebegehäuse und Trommelaufnahme jeweils als Baueinheit eine wesentliche Teilereduzierung erreicht und zudem ein kleinere axiale Bauhöhe der Antriebsvorrichtung erzielt wird, was sich günstig auf Fertigungskosten und auf den benötigten Einbauraum im Fahrzeug auswirkt. Mit der Verringerung der Teilezahl geht auch eine Gewichtsreduzierung einher. So entfallen gegenüber der bekannten Antriebsvorrichtung der Mitnehmer, die Dämpferelemente und der Getriebegehäusedeckel, dessen staubund spritzwasserschützende Funktionen gemäß einer vorteilhaften Ausführungsform der Erfindung durch einen Dichtungsring zwischen dem Schneckenrad und Seiltrommel vereinigenden Bauteil und der Trommelaufnahme übernommen werden, der ein wesentlich geringeres Gewicht hat als der Getriebegehäusedeckel und wesentlich billiger herzustellen ist. Die Schneckenrad und Seiltrommel vereinigende Baueinheit wird als Kunststoffspritzgußteil in einem einzigen Spritzvorgang gefertigt und bedarf keiner weiteren Nachbearbeitung.

Durch die in den weiteren Ansprüchen aufgeführten Maßnahmen sind vorteilhafte Weiterbildungen und Verbesserungen der im Anspruch 1 angegebenen elektromotorischen Antriebsvorrichtung möglich.

Gemäß einer bevorzugten Ausführungsform der Erfindung sind das Schneckenrad auf der einen Seite und die Seiltrommel auf der anderen Seite eines scheibenförmigen Trägers als axial wegstehende, koaxiale Hohlteile ausgebildet, und der Träger ist zur Drehlagerung der Baueinheit mit einer koaxialen Nabe versehen. Durch diese konstruktive Gestaltung wird ein besonders geringes Gewicht der aus Kunststoff gespritzten Baueinheit erzielt.

Gemäß einer vorteilhaften Ausführungsform der Erfindung ist die Baueinheit aus Schneckenrad und Seiltrommel auf einem im den Boden des topfförmigen Getriebegehäuses koaxial zur Trommelaufnahme endseitig aufgenommenen, frei auskragenden Lagerbolzen freidrehend angeordnet. Der Lagerbolzen wird dabei bevorzugt beim Kunststoffspritzen des topfförmigen Getriebegehäuses gleich mit eingespritzt. Bei der Montage wird die Dichtung auf die Baueinheit aufgesetzt und diese auf den Lagerbolzen aufgeschoben und gegen axiales Abfallen gesichert. Diese konstruktive Ausbildung ist dann von Vorteil, wenn der Außendurchmesser des Schneckenrads kleiner ist als der Außendurchmesser der Seiltrommel.

Soll dagegen der Außendurchmesser der Seiltrommel kleiner sein als der Außendurchmesser des Schneckenrads, so wird gemäß einer Ausführungsform der Erfindung der Boden des topfförmigen Getriebegehäuses als separater Lagerdeckel ausgebildet, der nach Einlegen der Schneckenrad und Seiltrommel vereinigenden Baueinheit in das Getriebegehäuse am Getriebegehäuse befestigt wird. Am Lagerdeckel ist ein Lagerzapfen ausgebildet, der koaxial zur Trommelaufnahme in das Innere des Getriebegehäuses vorspringt und die Nabe des Bauteils freidrehend aufnimmt.

Diese konstruktive Gestaltung ergibt zudem noch die Möglichkeit, durch eine definierte Verschiebung des Lagerdeckels quer zur Achse des Getriebegehäuses - vor dem z.B. durch Verschrauben erfolgenden Befestigen des Lagerdeckels am Getriebegehäuse - verzahnungsrelevante Toleranzen im Schneckengetriebe auszugleichen und damit das Verzahnungsspiel deutlich zu reduzieren. Außerdem entfällt ein separater Lagerbolzen und dessen Einspritzen ins Kunststoffgehäuse.

Gemäß einer vorteilhaften Ausführungsform der Erfindung ist zur Begrenzung des Axialspiels der Schneckenrad und Seiltrommel bildenden Baueinheit auf dem Lagerzapfen einerseits die Nabe an einer Stirnseite verschlossen ausgebildet und andererseits das Getriebegehäuse mit einer nach innen vorspringenden umlaufenden Radialschulter versehen, die auf der vom Lagerdeckel abgekehrten Seite des Schneckenrads dieses hintergreift. Mit der Befestigung des Lagerdeckels am Getriebegehäuse ist damit das Bauteil auf dem Lagerzapfen automatisch fixiert, und es bedarf keiner zusätzlichen Montageteile und Montagehandhabungen, um diese axiale Sicherung zu erreichen.

Gemäß einer vorteilhaften Ausführungsform der Erfindung ist der Lagerdeckel aus Blech ausgeführt und der Lagerzapfen domartig aus dem Blech ausgeprägt. Durch das stabile aber dünne Blech läßt sich die Bauhöhe der Antriebsvorrichtung weiter verkleinern.

### Zeichnung

Die Erfindung ist anhand von in der Zeichnung dargestellten Ausführungsbeispielen in der nachfolgenden Beschreibung näher erläutert. Es zeigen:
- Fig. 1: ausschnittweise einen Axialschnitt einer elektromotorischen Antriebsvorrichtung für einen Seilzugfensterheber,
- Fig. 2: einen Axialschnitt einer elektromotorischen Antriebsvorrichtung für einen Seilzugfensterheber gemäß einem zweiten Ausführungsbeispiel.

### Beschreibung der Ausführungsbeispiele

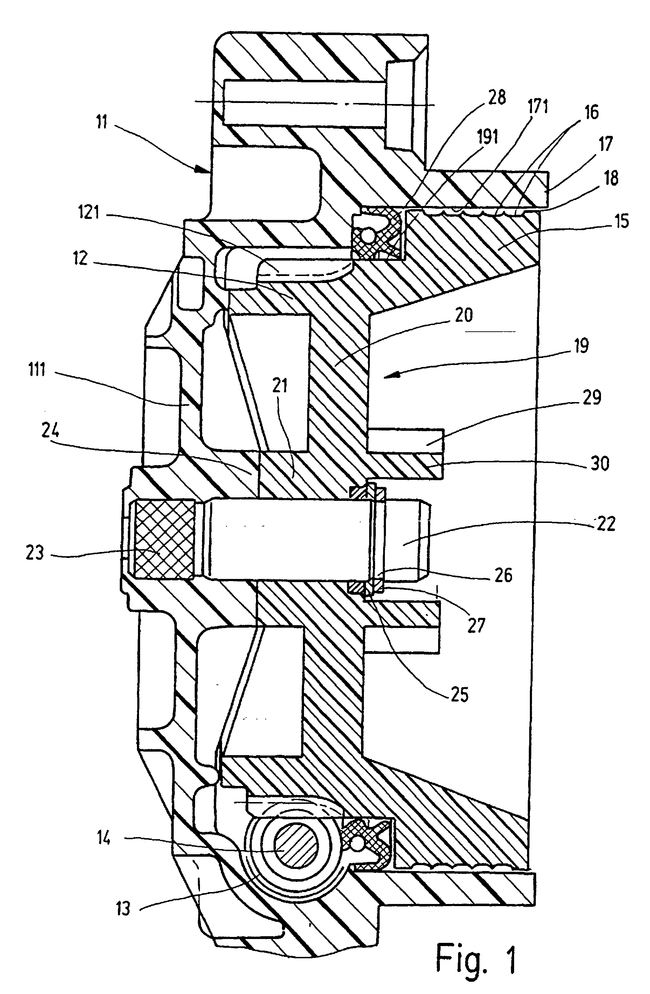

Die in Fig. 1 ausschnittweise im Axialschnitt dargestellte elektromotorische Antriebsvorrichtung für einen Seilzugfensterheber einer Seitenscheibe in der Fahrzeugtür eines Kraftfahrzeugs weist ein aus Kunststoff gespritztes topfförmiges Getriebegehäuse 11 auf, in dem ein Schneckengetriebe, bestehend aus einem Schneckenrad 12 und einer Schnecke 13, aufgenommen ist. Die Schnecke 13 ist auf einer Abtriebswelle 14 eines hier nicht zu sehenden Elektromotors befestigt oder einstückig mit der Abtriebswelle 14. Der Rotor sitzt drehfest auf der Abtriebswelle 14 und ist koaxial im Stator aufgenommen. Zum Antrieb des Fensterhebers ist ein hier nicht dargestelltes Seil auf dem Umfang einer Seiltrommel 15 aufgewickelt und als Seilschlinge zu dem Fensterheber geführt. Durch Drehen der Seiltrommel 15 in die eine oder andere Drehrichtung wird die Seilschlinge verschoben und damit der Fensterheber auf- oder abwärts bewegt. Zum Aufwickeln des Seils ist am Umfang der Seiltrommel 15 eine spiralförmig über den Umfang verlaufende Wickelrolle 16 ausgebildet, in der das Seil zumindest teilweise einliegt. Die Seiltrommel 15 ist von einer Trommelaufnahme 17 mit radialem Spaltabstand 18 umschlossen, die ein Abrutschen oder Abfallen des Seils verhindert und zugleich zusammen mit der Seiltrommel 15 eine Abdichtung des Getriebegehäuses 11 ohne zusätzlichen Gehäusedeckel ermöglicht. Die zylindrische Trommelaufnahme 17 ist koaxial zur Gehäuseachse einstückig an das Getriebegehäuse 11 angespritzt.

Die Seiltrommel 15 wird von dem zur Drehbewegung von der Schnecke 13 angetriebenen Schneckenrad 12 je nach Drehrichtung des Elektromotors in die eine oder andere Richtung gedreht. Hierzu sind Schneckenrad 12 und Seiltrommel 15 zu einer Baueinheit 19 vereinigt, die als Spritzgußteil aus Kunststoff gefertigt ist. Zur Erzielung einer geringgewichtigen Baueinheit 19, ist das Schneckenrad 12 auf der einen Seite und Seiltrommel 15 auf der anderen Seite eines scheibenförmigen Trägers 20 als axial wegstehendes, koaxiales Hohlteil ausgebildet und zur Drehlagerung der Baueinheit 19 im Getriebegehäuse 11 am scheibenförmigen Träger 20 eine koaxiale Nabe 21 angespritzt. Die Nabe 21 ist auf einen im Boden 111 des topfförmigen Getriebegehäuses 11 koaxial zur Gehäuseachse endseitig drehfest aufgenommenen, frei auskragenden Lagerbolzen 22 freidrehend aufgesetzt. Der Lagerbolzen 22, der zur besseren Verbindung mit dem Kunststoff des Getriebegehäuses 11 an seinem einen Ende eine Riffelung 23 trägt, wird beim Spritzen des Getriebegehäuses 11 in den Boden 111 mit eingespritzt. Zur Begrenzung des Axialspiels der Baueinheit 19 auf dem Lagerbolzen 22 ist einerseits am Boden 111 des Getriebegehäuses 11 ein den Lagerbolzen 22 konzentrisch umschließender Anschlagbund 24 ausgebildet, an dem die Nabe 21 mit ihrer einen Stirnseite anliegt, und andererseits an der vom Anschlagbund 24 abgekehrten Stirnseite der Nabe 21 auf den Lagerbolzen 22 eine Scheibe 25 aufgesetzt, die von einem in einer Nut 26 im Lagerbolzen 22 eingesetzten Sprengring 27 gehalten wird.

Da der Außendurchmesser der Trommelaufnahme 17 größer ist als der Außendurchmesser des Schneckenrads 12 deckt die Seiltrommel 15 das Innere des Getriebegehäuses 11 auf der dem Boden 111 gegenüberliegenden Gehäuseöffnung ab. Für den Staubund Spritzwasserschutz ist zwischen der von Schneckenrad 12 und Seiltrommel 15 gebildeten Baueinheit 19 einerseits und der Trommelaufnahme 17 andererseits eine ringförmige Dichtung 28 eingelegt, die auf einem glattflächigen Ringabschnitt 191 des Bauteils 19 befestigt ist und sich gegen die Innenwand 171 der Trommelaufnahme 17 andrückt. Der Ringabschnitt 191 ist zwischen der Stirnverzahnung 121 des Schneckenrads 12 und den Rillen 16 der Seiltrommel 15 angeordnet. Ferner erfolgt eine Abdichtung zu der Nabe 21 und dem Lagerbolzen 22. Zum Messen des Drehmoments etc. während der Fertigung ist die Schneckenrad 12 und Seiltrommel 15 vereinigende Baueinheit 19 mit einer Prüfverzahnung 29 versehen, die als konzentrisch zur Nabe 21 ausgebildeter Zahnkranz 30 axial von dem scheibenförmigen Träger 20 in das Innere des die Seiltrommel 15 bildenden Hohlteils hineinragt. Zahnkranz 30 mit Prüfverzahnung 29 ist einstückig mit der Baueinheit 19 verbunden und wird beim Spritzen der Baueinheit 19 gleich mit angeformt.

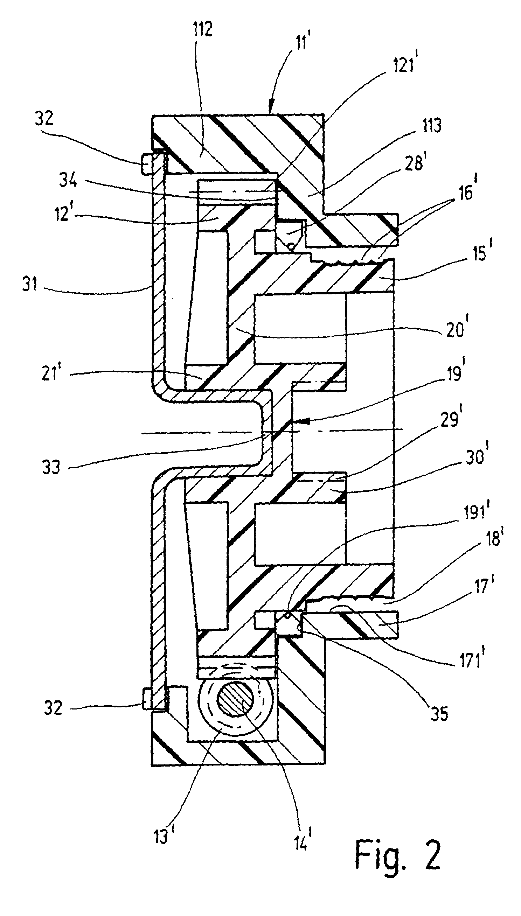

Die beschriebene konstruktive Gestaltung der Antriebsvorrichtung gemäß Fig. 1 erfordert aus Montagegründen, daß der Außendurchmesser des Schneckenrads 12 immer kleiner ist als der Außendurchmesser der Seiltrommel 15. Möchte man aus bestimmten Gründen dagegen den Außendurchmesser des Schneckenrads 12 größer machen als den Außendurchmesser der Seiltrommel 15, so erfordert dies eine konstruktive Gestaltung der Antriebsvorrichtung, wie sie in Fig. 2 im Axialschnitt dargestellt ist. Soweit die Bauteile in Fig. 2 mit Bauteilen in Fig. 1 übereinstimmen, sind sie mit gleichen, mit einem Beistrich versehenen Bezugszeichen gekennzeichnet.

Abweichend von dem Getriebegehäuse 11 in Fig. 1 ist der Boden des Getriebegehäuses 11' nicht einstückig mit dem ebenfalls aus Kunststoff gefertigten Getriebegehäuse 11' sondern als separater Lagerdeckel 31 aus Blech ausgebildet, der mittels Schrauben 32 am Getriebegehäuse 11' befestigt ist. Aus dem Lagerdeckel 31 ist ein in das Innere des Getriebegehäuses 11' hin vorspringender Lagerzapfen 33 ausgeformt, der domartig aus dem Blech ausgeprägt ist. Auf dem Lagerzapfen 33 sitzt freidrehend die Nabe 21' der Baueinheit 19', die in gleicher Weise wie in Fig. 1 Schneckenrad 12' und Seiltrommel 15' vereinigt, wobei allerdings das Schneckenrad 12' einen größeren Außendurchmesser als die Seiltrommel 15' besitzt. Zur Begrenzung des Axialspiels der Baueinheit 19 auf dem Lagerzapfen 33 ist einerseits die Nabe 21' an einer Stirnseite verschlossen ausgebildet und andererseits das Getriebegehäuse 11' mit einer nach innen vorspringenden, umlaufenden Radialschulter 34 versehen, die auf der vom Lagerdeckel 31 abgekehrte Seite des Schneckenrads 12' dieses hintergreift. Die Radialschulter 34 ist dabei an einem einen Übergang von der hohlzylindrischen Gehäusewand 112 des Gehäuses 11' zu der Trommelaufnahme 17' bildenden ringförmigen Gehäuseabschnitt 113 des Getriebegehäuses 11' ausgebildet. In gleicher Weise wie in Fig. 1 ist zwischen dem Bauteil 19' und der Trommelaufnahme 17' eine ringförmige Dichtung 28' eingelegt, die anders als in Fig. 1 diesmal in der Trommelaufnahme 17' gehalten ist und sich an den glattflächigen Ringabschnitt 191' der Baueinheit 19' andrückt. Im übrigen stimmt die Antriebsvorrichtung gemäß Fig. 2 in Aufbau und Funktion mit der zu Fig. 1 beschriebenen Antriebsvorrichtung überein.

Zur Montage der Antriebsvorrichtung wird die ringförmige Dichtung 28' in das Getriebegehäuse 11' in einer dort ausgebildeten Ringschulter 35 eingelegt. Dann wird die das Schneckenrad 12' und die Seiltrommel 15' vereinigende Baueinheit 19' in das Getriebegehäuse 11' eingesetzt und der Lagerdeckel 31 mit seinem Lagerzapfen 33 in die Nabe 21' der Baueinheit 19' eingesteckt. Nach Zentrieren der Baueinheit 19' innerhalb des Getriebegehäuses 11', was durch Verschieben des Lagerdeckels 31 quer zur Gehäuseachse bewirkt werden kann, wird der Lagerdeckel 31 mittels der Schrauben 32 am Getriebegehäuse 11' festgelegt. Für Prüfzwecke trägt die Baueinheit 19' in gleicher Weise wie in Fig. 1 die auf dem koaxialen Zahnkranz 30' ausgebildete Prüfverzahnung 29'.

## Patentansprüche

1. Elektromotorische Antriebsvorrichtung für Abdeckglieder von Öffnungen in Fahrzeugen, wie Fensterscheiben, Schiebedächer und dergleichen, mit einem topfförmigen Getriebegehäuse (11, 11') mit einem im Getriebegehäuse (11, 11') aufgenommenen Schneckengetriebe, das ein frei drehend gelagertes Schneckenrad (12, 12') aufweist, und mit einer vom Schneckenrad (12, 12') gedrehten Seiltrommel (15, 15'), auf deren Umfang ein Seil zum Antrieb des Abdeckglieds aufgewickelt ist, wobei die Seiltrommel (15, 15') mit dem Schneckenrad (12, 12') als eine Baueinheit (19, 19') ausgebildet ist und am Umfang von einer Trommelaufnahme (17, 17') umgeben ist, **dadurch gekennzeichnet, dass** die Seiltrommel (15, 15') mit dem Schneckenrad (12, 12') als einteiliges Spritzgussteil gefertigt, und die Trommelaufnahme (17, 17') einstückig mit dem Getriebegehäuse (11, 11') ausgebildet ist.

2. Elektromotorische Antriebsvorrichtung für Abdeckglieder von Öffnungen in Fahrzeugen, wie Fensterscheiben, Schiebedächer und dergleichen, mit einem topfförmigen Getriebegehäuse (11, 11') mit einem im Getriebegehäuse (11, 11') aufgenommenen Schneckengetriebe, das ein frei drehend gelagertes Schneckenrad (12, 12') aufweist, und mit einer vom Schneckenrad (12, 12') gedrehten Seiltrommel (15, 15'), auf deren Umfang ein Seil zum Antrieb des Abdeckglieds aufgewickelt ist, wobei die Seiltrommel (15, 15') mit dem Schneckenrad (12, 12') als eine Baueinheit (19, 19') ausgebildet ist und am Umfang von einer eine Innenwand (171, 171') aufweisende Trommelaufnahme (17, 17') umgeben ist, **dadurch gekennzeichnet, dass** die Trommelaufnahme (17, 17') einstückig mit dem Getriebegehäuse (11, 11') ausgebildet ist, und zwischen der Innenwand (117, 117') der in axialer Richtung offenen Trommelaufnahme (17, 17') und einer äußeren Mantelfläche der Baueinheit (19, 19', 191, 191') eine ringförmige Dichtung (28, 28') angeordnet ist, die das Getriebegehäuse (11, 111') ohne zusätzlichen Gehäusedeckel abdichtet.

3. Vorrichtung nach Anspruch 1 oder 2, **dadurch gekennzeichnet, daß** das Schneckenrad (12;12') auf der einen Seite und die Seiltrommel (15;15') auf der anderen Seite eines scheibenförmigen Trägers (20;20') jeweils als axial wegstehendes, koaxiales Hohlteil ausgebildet ist, und daß der Träger (20;20') zur Drehlagerung der Baueinheit (19;19') mit einer koaxialen Nabe (21;21') versehen ist.

4. Vorrichtung nach Anspruch 3, **dadurch gekennzeichnet, daß** am Träger (20;20') ein Zahnkranz (30;30') mit einer Prüfverzahnung (29;29') konzentrisch zur Nabe (21;21') angeordnet ist, der einstückig mit dem Träger(20;20') ausgebildet ist und in das Innere des die Seiltrommel (15;15') bildenden Hohlteils hineinragt.

5. Vorrichtung nach einem der Ansprüche 1 - 4, **dadurch gekennzeichnet, daß** die Baueinheit (19) auf einem im Boden (11) des topfförmigen Getriebegehäuses (11) koaxial zur Trommelaufnahme (17) endseitig drehfest aufgenommenen, frei auskragenden Lagerbolzen (22) freidrehend sitzt.

6. Vorrichtung nach Anspruch 5, **dadurch gekennzeichnet, daß** zur Begrenzung des Axialspiels der Baueinheit (19) auf dem Lagerbolzen (22) am Boden (111) des Getriebegehäuses (11) ein den Lagerbolzen (22) konzentrisch umschließender Anschlagbund (24) ausgebildet und an der vom Anschlagbund (24) abgekehrten Stirnseite der Nabe (21) auf dem Lagerbolzen (22) ein radial vorstehender Sicherungsring (25,26,27) befestigt ist.

7. Vorrichtung nach einem der Ansprüche 1 - 6, **dadurch gekennzeichnet, daß** der Außendurchmesser der Seiltrommel (15) größer ist als der des Schneckenrads (12).

8. Vorrichtung nach einem der Ansprüche 1 - 4, **dadurch gekennzeichnet, daß** der Boden des topfförmigen Getriebegehäuses (11') als separater Lagerdeckel (31) ausgebildet ist, der am Getriebegehäuse (11'), z.B. durch Verschrauben, befestigt ist und einen in das Innere des Getriebegehäuses (11') vorspringenden, zur Trommelaufnahme (17') koaxialen Lagerzapfen (33) trägt, auf dem die Nabe (21') der Baueinheit (19') freidrehend aufsitzt.

9. Vorrichtung nach Anspruch 8, **dadurch gekennzeichnet, daß** der Lagerdeckel (31) quer zur Achse des Getriebegehäuses (11') verschiebbar und einstellbar ist.

10. Vorrichtung nach Anspruch 8 oder 9, **dadurch gekennzeichnet, daß** der Lagerzapfen (33) einstückig mit dem Lagerdeckel (31) ausgebildet ist.

11. Vorrichtung nach Anspruch 10, **dadurch gekennzeichnet, daß** der Lagerzapfen (33) domartig aus dem Lagerdeckel (31) ausgeformt ist.

12. Vorrichtung nach Anspruch 11, **dadurch gekennzeichnet, daß** der Lagerdeckel (31) aus Blech ausgeführt und der Lagerzapfen (33) aus dem Blech ausgeprägt ist.

13. Vorrichtung nach einem der Ansprüche 8 - 12, **dadurch gekennzeichnet, daß** zur Begrenzung des Axialspiels der Baueinheit (19') auf dem Lagerzapfen (33) einerseits die Nabe (21') an einer Stirnseite verschlossen ausgebildet ist und andererseits das Getriebegehäuse (11') eine nach innen vorspringende, umlaufende Radialschulter (34) aufweist, die auf der vom Lagerdeckel (31) abgekehrten Seite des Schneckenrads (12') dieses hintergreift

14. Vorrichtung nach einem der Ansprüche 8 - 13, **dadurch gekennzeichnet, daß** der Außendurchmesser des Schneckenrads (12') größer ist als der der Seiltrommel (15').

15. Vorrichtung nach Anspruch 13 und 14, **dadurch gekennzeichnet, daß** die Radialschulter (34) an einem einen Übergang von der hohlzylindrischen Gehäusewand (112) des Getriebegehäuses (11') zu der Trommelaufnahme (17') bildenden ringförmigen Gehäuseabschnitts (113) ausgebildet ist.

## Claims

1. Electromotive drive device for covering members of apertures in vehicles, such as window panes, sliding roofs and the like, with a bowl-shaped gear case (11, 11') having a worm gear which is received in the gear case (11, 11') and which has a freely rotatably mounted worm wheel (12, 12'), and with a rope drum (15, 15') which is rotated by the worm wheel (12, 12') and on the circumference of which is wound a rope for driving the covering member, the rope drum (15, 15') being produced, together with the worm wheel (12, 12'), as a structural unit (19, 19') and being surrounded on the circumference by a drum receptacle (17, 17'), **characterized in that** the rope drum (15, 15') is manufactured, together with the worm wheel (12, 12'), as a one-part injection moulding, and the drum receptacle (17, 17') is produced in one piece with the gear case (11, 11').

2. Electromotive drive device for covering members of apertures in vehicles, such as window panes, sliding roofs and the like, with a bowl-shaped gear case (11, 11') having a worm gear which is received in the gear case (11, 11') and which has a freely rotatably mounted worm wheel (12, 12'), and with a rope drum (15, 15') which is rotated by the worm wheel (12, 12') and on the circumference of which is wound a rope for driving the covering member, the rope drum (15, 15') being produced, together with the worm wheel (12, 12'), as a structural unit (19, 19') and being surrounded on the circumference by a drum receptacle (17, 17') having an inner wall (171, 171'), **characterized in that** the drum receptacle (17, 17') is produced in one piece with the gear case (11, 11'), and there is arranged, between the inner wall (117, 117') of the axially open drum receptacle (17, 17') and an outer surface area of the structural unit (19, 19', 191, 191'), an annular seal (28, 28') which seals off the gear case (11, 111') without an additional case cover.

3. Device according to Claim 1 or 2, **characterized in that** the worm wheel (12; 12'), on one side of a disc-shaped carrier (20; 20'), and the rope drum (15; 15'), on the other side of the said disc-shaped carrier, are each designed as an axially projecting coaxial hollow part, and **in that** the carrier (20; 20') is provided with a coaxial hub (21; 21') for the rotational mounting of the structural unit (19; 19').

4. Device according to Claim 3, **characterized in that** a toothed ring (30; 30') with a test toothing (29; 29') is arranged on the carrier (20; 20') concentrically to the hub (21; 21'), the said toothed ring being produced in one piece with the carrier (20; 20') and projecting into the interior of the hollow part forming the rope drum (15; 15').

5. Device according to one of Claims 1-4, **characterized in that** the structural unit (19) is seated freely rotatably on a freely projecting bearing bolt (22) received in the bottom (111) of the bowl-shaped gear case (11) coaxially to the drum receptacle (17) and fixedly in terms of rotation on the end face.

6. Device according to Claim 5, **characterized in that**, to limit the axial play of the structural unit (19), a stop collar (24) concentrically surrounding the bearing bolt (22) is formed on the bearing bolt (22) at the bottom (111) of the gear case (11), and a radially projecting securing ring (25, 26, 27) is fastened to that end face of the hub (21) which faces away from the stop collar (24).

7. Device according to one of Claims 1-6, **characterized in that** the outside diameter of the rope drum (15) is larger than that of the worm wheel (12).

8. Device according to one of Claims 1-4, **characterized in that** the bottom of the bowl-shaped gear case (11') is designed as a separate bearing cover (31) which is fastened to the gear case (11'), for example by screwing, and which carries a bearing journal (33) which projects into the interior of the gear case (11'), is coaxial to the drum receptacle (17') and on which the hub (21') of the structural unit (19') is seated freely rotatably.

9. Device according to Claim 8, **characterized in that** the bearing cover (31) is capable of being displaced and of being set transversely to the axis of the gear case (11').

10. Device according to Claim 8 or 9, **characterized in that** the bearing journal (33) is formed in one piece with the bearing cover (31).

11. Device according to Claim 10, **characterized in that** the bearing journal (33) is shaped out of the bearing cover (31) in a dome-like manner.

12. Device according to Claim 11, **characterized in that** the bearing cover (31) is produced from sheet metal and the bearing journal (33) is pressed out of the metal sheet.

13. Device according to one of Claims 8-12, **characterized in that**, to limit the axial play of the structural unit (19') on the bearing journal (33), on the one hand, the hub (21') is designed to be closed on one end face, and, on the other hand, the gear case (11') has an inwardly projecting peripheral radial shoulder (34) which engages behind the worm wheel (12'), on that side of the latter which faces away from the bearing cover (31).

14. Device according to one of Claims 8-13, **characterized in that** the outside diameter of the worm wheel (12') is larger than that of the rope drum (15').

15. Device according to Claims 13 and 14, **characterized in that** the radial shoulder (34) is formed on an annular case portion (113) which constitutes a transition from the hollow-cylindrical case wall (112) of the gear case (11') to the drum receptacle (17').

## Revendications

1. Dispositif d'entraînement à moteur électrique pour des éléments d'obturation ou de fermeture d'ouvertures de véhicule telles que des vitres de fenêtres, des toits coulissants ou des moyens analogues, comprenant
un boîtier de transmission (11, 11') en forme de pot,
une transmission à vis logée dans le boîtier de transmission (11, 11'), cette transmission ayant une roue à vis (12, 12') montée libre en rotation à une extrémité et
un tambour à câble (15, 15') tourné par la roue à vis (12, 12'), tambour dont la périphérie extérieure peut recevoir un câble pour entraîner élément d'obturateur,
le tambour à câble (15, 15') formant un ensemble unique (19, 19') avec la roue à vis (12, 12') et ayant sa périphérie entourée par un logement de tambour (17, 17').
**caractérisé en ce que**
le tambour à câble (15, 15') est fabriqué avec la roue à vis (12, 12') comme pièce injectée, unique, et le logement de tambour (17, 17') fait corps avec le boîtier de transmission (11, 11').

2. Dispositif d'entraînement à moteur électrique pour des éléments d'obturation ou d'occultation d'ouvertures de véhicule telles que des vitres de fenêtres, des toits ouvrants ou analogues, comportant un boîtier de transmission (11, 11') en forme de pot, avec une transmission à vis reçue dans le boîtier de transmission (11, 11'), cette transmission ayant une roue à vis (12, 12') montée libre en rotation et un tambour à câble (15, 15') entraîné en rotation par une roue à vis (12, 12'), ce tambour à câble recevant à sa périphérie un câble enroulé pour entraîner l'élément d'obturation,
le tambour à câble (15, 15') formant un ensemble (19, 19') avec la roue à vis (12, 12') et sa périphérie entourée par un logement de tambour (17, 17') ayant une paroi intérieure (171, 171'),
**caractérisé en ce que**
le logement de tambour (17, 17') est réalisé en une seule pièce avec le boîtier de transmission (11, 11'), et
entre la paroi intérieure (117. 117') du logement de tambour (17, 17') s'ouvrant dans la direction axiale et une surface enveloppe extérieure de l'ensemble (19, 19', 191, 191'), un joint annulaire (28, 28') réalise l'étanchéité du boîtier de transmission (11, 11') sans nécessiter de couvercle de boîtier supplémentaire.

3. Dispositif selon la revendication 1 ou 2,
**caractérisé en ce que**
la roue à vis (12, 12') est réalisée d'un côté d'un support en forme de disque (20, 20') et le tambour à câble (15. 15') sur l'autre côté, chaque fois sous la forme d'uns pièce creuse coaxiale, venant axialement en saillie, et
le support (20, 20') est muni d'un moyeu coaxial (21, 21') pour assurer le montage en rotation de l'ensemble (19, 19').

4. Dispositif selon la revendication 3,
**caractérisé en ce que**
le support (20, 20') comporte une couronne dentée (30, 30') avec une denture d'essai (29, 29') concentrique au moyeu (21, 21') faisant corps avec le support (20, 20') et pénétrant à l'intérieur de la cavité formant le tambour à câble (15, 15').

5. Dispositif selon l'une quelconque des revendications 1 à 4.
**caractérisé en ce que**
l'ensemble (19) est monté libre en rotation sur un goujon de palier (22) en porte à faux, solidaire en rotation d'un côté dans le fond (111) du boîtier de transmission en forme de pot (11), coaxialement au logement (17) du tambour.

6. Dispositif selon la revendication 5,
**caractérisé en ce que**
pour limiter le jeu axial de l'ensemble (19) sur le goujon de palier (22). le fond (111) du boîtier de transmission (11) est muni d'une collerette de butée (24) entourant le goujon de palier (22) de manière concentrique et sur la face frontale à l'opposé de la collerette de butée (24), le moyeu (21) est retenu sur le goujon de palier (22) par une bague de sécurité (25, 26, 27) venant radialement en saillie.

7. Dispositif selon l'une quelconque des revendications 1 à 6,
**caractérisé en ce que**
le diamètre extérieur du tambour à câble (15) est plus grand que celui de la roue à vis (12).

8. Dispositif selon l'une quelconque des revendications 1 à 4.
**caractérisé en ce que**
le fond du boîtier de transmission (11') en forme de pot est réalisé comme couvercle de palier (31) séparé, fixé au boîtier de transmission (11') par exemple par vissage et portant un tourillon de palier (33) coaxial au logement de tambour (17'), venant en saillie à l'intérieur du boîtier de transmission (11') et le moyeu (21') de l'ensemble (19') est monté libre en rotation sur ce tourillon de palier.

9. Dispositif selon la revendication 8,
**caractérisé en ce que**
le couvercle de palier (31) peut coulisser et se régler transversalement à l'axe du boîtier de transmission (11').

10. Dispositif selon l'une quelconque des revendications 8 ou 9,
**caractérisé en ce que**
le tourillon de palier (33) est réalisé en une seule pièce avec le chapeau de palier (31).

11. Dispositif selon la revendication 10,
**caractérisé en ce que**
le tourillon de palier (33) est réalisé en forme de dôme dans le couvercle de palier (31).

12. Dispositif selon la revendication 11,
**caractérisé en ce que**
le couvercle de palier (31) est en tôle et le tourillon de palier (33) est embouti dans la tôle.

13. Dispositif selon l'une quelconque des revendications 8 à 12,
**caractérisé en ce que**
pour limiter le jeu axial de l'ensemble (19') sur le tourillon de palier (33), d'uns part le moyeu (21') est fermé à sa face frontale et, d'autre part, le boîtier de transmission (11') présente un épaulement radial périphérique (34) venant en saillie vers l'intérieur, cet épaulement radial venant prendre derrière la roue à vis (12') du côté non tourné vers le couvercle de palier (31).

14. Dispositif selon l'une quelconque des revendications 8 à 13,
**caractérisé en ce que**
le diamètre extérieur de la roue à vis (12') est plus grand que celui du tambour à câble (15').

15. Dispositif selon l'une quelconque des revendications 13 et 14,
**caractérisé en ce que**
l'épaulement radial (34) est réalisé à la transition entre la paroi de boîtier cylindrique creuse (112) du boîtier de transmission (11') et le segment de boîtier (113) annulaire formant le logement (17') du tambour.
